(19) Europäisches Patentamt / European Patent Office / Office européen des brevets

(11) **EP 1 565 786 B1**

(12) **FASCICULE DE BREVET EUROPEEN**

(45) Date de publication et mention de la délivrance du brevet:
**21.12.2016 Bulletin 2016/51**

(21) Numéro de dépôt: **03789450.8**

(22) Date de dépôt: **24.11.2003**

(51) Int Cl.:
***G02F 1/35*** *(2006.01)*

(86) Numéro de dépôt international:
**PCT/EP2003/050882**

(87) Numéro de publication internationale:
**WO 2004/051360 (17.06.2004 Gazette 2004/25)**

(54) **PROCEDE DE REALISATION DE RESEAUX OPTIQUES NON LINEAIRES EPAIS**

PROZESS ZUR HERSTELLUNG VON DICKEN OPTISCHEN NICHTLINEARGITTERN

METHOD OF PRODUCING THICK NON-LINEAR OPTICAL GRATINGS

(84) Etats contractants désignés:
**DE GB IT SE**

(30) Priorité: **29.11.2002 FR 0215075**

(43) Date de publication de la demande:
**24.08.2005 Bulletin 2005/34**

(73) Titulaire: **Thales**
**92400 Courbevoie (FR)**

(72) Inventeurs:
- **GRISARD, Arnaud**
  **Thales Intellectual Property**
  **F-94117 Arcueil (FR)**
- **LALLIER, Eric**
  **Thales Intellectual Property**
  **F-94117 Arcueil (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**FR-A- 2 704 953**

- **ANGELL M J ET AL: "GROWTH OF ALTERNATING /-ORIENTED II-VI REGIONS OF QUASI-PHASE-MATCHED NONLINEAR OPTICAL DEVICES ON GAAS SUBSTRATES" APPLIED PHYSICS LETTERS, AMERICAN INSTITUTE OF PHYSICS. NEW YORK, US, vol. 64, no. 23, 6 juin 1994 (1994-06-06), pages 3107-3109, XP000449591 ISSN: 0003-6951**
- **BECOUARN L ET AL: "Second harmonic generation of CO2laser using thick quasi-phase-matched GaAs layer grown by hydride vapour phase epitaxy" ELECTRONICS LETTERS, IEE STEVENAGE, GB, vol. 34, no. 25, 10 décembre 1998 (1998-12-10), pages 2409-2410, XP006010702 ISSN: 0013-5194 cité dans la demande**
- **EYRES L A ET AL: "ALL-EPITAXIAL FABRICATION OF THICK, ORIENTATION-PATTERNED GAAS FILMS FOR NONLINEAR OPTICAL FREQUENCY CONVERSION" APPLIED PHYSICS LETTERS, AMERICAN INSTITUTE OF PHYSICS. NEW YORK, US, vol. 79, no. 7, 13 août 2001 (2001-08-13), pages 904-906, XP001082319 ISSN: 0003-6951 cité dans la demande**

## Description

Le domaine de l'invention est celui des réseaux optiques non linéaires. D'une façon générale, l'interaction de la lumière avec un matériau optiquement non linéaire en modifie les propriétés optiques. On génère ainsi une ou plusieurs ondes lumineuses dont les fréquences, les phases ou les polarisations sont différentes de celle de la lumière incidente. Les applications sont nombreuses. On citera notamment les doubleurs et les mélangeurs de fréquence optique ou les amplificateurs et oscillateurs paramétriques optiques utilisés dans les domaines des lasers de puissance ou des télécommunications à haut débit.

L'effet optique non linéaire dépend du tenseur de susceptibilité du matériau reliant la polarisation induite de l'onde générée au champ électrique de l'onde incidente. D'une façon générale, ce tenseur de forme matricielle comprend 27 composantes appelées coefficients non linéaires et notés d.

Les processus non-linéaires quadratiques ou d'ordre 2 qui sont les plus fréquemment utilisés nécessitent l'accord de phase entre l'onde incidente dite onde de pompe et la ou les ondes générées dite ondes harmoniques lors de la propagation dans le milieu non-linéaire. La dispersion des indices optiques entre l'onde de pompe et les ondes harmoniques ne permet en pratique de satisfaire cette condition que dans un nombre limité de matériaux biréfringents. Malheureusement, ces matériaux ne possèdent pas nécessairement les meilleurs coefficients non-linéaires, des plages de longueur d'onde importantes, des gammes de température d'utilisation et de focalisation des faisceaux suffisantes.

L'utilisation de réseaux optiques non linéaires composés de structures à base de cristaux optiques non linéaires permet, sous certaines conditions, de s'affranchir en partie de ces limitations. On utilise, notamment, la technique du Quasi-Accord de Phase (QAP). Celle-ci consiste à réaliser des modifications locales des propriétés non-linéaires d'un cristal non linéaire afin que le désaccord de phase entre les ondes accumulé au cours de la propagation soit périodiquement compensé (J.A. Armstrong, N. Bloembergen, J. Ducuing and P.S. Pershan, « Interactions between light waves in a nonlinear dielectric », Physical Review, Vol. 127, n°6, pp. 1918-1939, 1962). Dans le cas de matériaux ferroélectriques comme le niobate de lithium, on sait inverser le signe de la polarisation diélectrique de domaines de quelques microns de large, dans toute la profondeur des substrats, par application d'un champ électrique selon l'axe cristallographique Z de ce matériau. Soit d le coefficient non-linéaire mis en jeu, un faisceau se propageant perpendiculairement à l'axe cristallographique Z voit une modulation de la susceptibilité du type +d/ -d/ +d/ -d/ +d/..., propice au QAP. En fonction des propriétés spectrales recherchées, il peut être avantageux d'utiliser d'autres combinaisons de coefficients non-linéaires, à valeurs opposées ou différentes, à pas constant ou variable, à rapport cyclique symétrique ou non, à pas unique ou à sections successives de pas différents.

Certains semi-conducteurs facilement disponibles grâce à l'industrie de la micro-électronique, comme l'arséniure de gallium (AsGa), présentent à la fois de forts coefficients non-linéaires et de larges gammes de transparence. Toutefois, ces cristaux appartiennent à la classe cristallographique de symétrie cubique, ce qui les rend isotropes, et donc impropres au traditionnel accord de phase biréfringent. D'autre part, ils ne disposent pas des propriétés ferroélectriques utilisables pour structurer un réseau optique non-linéaire comme les cristaux de niobate de lithium.

Il est cependant possible d'utiliser l'AsGa en régime de QAP en fabriquant des structures à orientation cristalline périodiquement inversée. Par exemple, on peut réaliser des empilements monolithiques de lames d'AsGa assemblées tête-bêche puis les soumettre à une cuisson sous pression (E. Lallier, M. Brevignon and J. Lehoux, « Efficient second-harmonic generation of a $CO_2$ laser with a quasi-phase-matched GaAs crystal», Optics Letters, Vol. 23, n°19, pp. 1511-1513, 1998). Cependant, il est impossible de manipuler en pratique un grand nombre de lames d'épaisseur faible, ce qui limite l'intérêt de tels empilements.

Les méthodes de dépôts par épitaxie permettent de fabriquer des structures d'AsGa à orientation cristalline périodiquement inversée avec moins de contraintes que la technique précédente concernant les périodes et la longueur des réseaux.

Pour des applications d'optique guidée, la croissance épitaxiale de couches guidantes est possible à partir d'un substrat-germe comportant un réseau de bandes d'AsGa de faible épaisseur d'orientation inversée (.J.B. Yoo, R. Bhat, C. Caneau and M.A. Koza, « Quasi-phase-matched second-harmonic generation in AlGaAs waveguides with periodic domain inversion achieved by wafer-bonding», Applied Physics Letters, Vol. 66, n°25, pp. 3410-3412, 1995).

Pour des applications mettant en jeu des puissances optiques importantes, il est nécessaire de disposer de réseaux optiques non-linéaires massifs de plusieurs centaines de microns d'épaisseur. Les dépôts par épitaxie de type « Organo-Metallic Chemical Vapour Déposition », ou OMCVD, et « Molecular Beam Epitaxy », ou MBE, ne sont pas adaptés. La technique de dépôt à partir d'un substrat-germe, sélective en orientation cristalline, dite « Hydride Vapour Phase Epitaxy »ou HVPE, peut néanmoins conduire à des réseaux optiques non-linéaires épais à partir de structures à base d'AsGa (L. Becouam, B. Gerard, M. Brevignon, J. Lehoux, Y. Gourdel and E . Lallier, « Second-harmonic generation of $CO_2$ laser using thick quasi-phase-matched GaAs layer grown by hydride vapour phase epitaxy», Electronics Letters, Vol. 34, n°25, pp. 2409-2410, 1998 - L.A. Eyres, P.J. Tourreau, T.J. Pinguet, C.B. Ebert, J.S. Harris, M.M. Fejer, L. Becouam, B. Gerard and E. Lallier, « All-epitaxial fabrication of thick, orientation-pattemed GaAs films for nonlinear optical frequency conversion », Applied Physics Letters, Vol. 79, n°7, pp. 904-907, 2001).

Ces techniques présentent des inconvénients majeurs. Bien que les vitesses de croissance par HVPE sur les deux orientations présentes à la surface du substrat-germe soient très proches, un écart résiduel demeure et conduit à une surface au relief marqué, ce point étant identifié comme la cause d'importantes pertes à la propagation.

Des défauts de croissance fixent également une limite à la qualité des cristaux obtenus : plus la période des réseaux optiques non-linéaires est petite, plus il devient difficile d'obtenir ces derniers de façon fidèle au substrat-germe sur une grande épaisseur.

Le procédé proposé par l'invention permet soit d'obtenir un réseau optique non linéaire de bonne qualité sur des épaisseurs importantes, soit de réaliser des guides d'onde comportant un réseau optique non linéaire sans atténuations importantes. Ce procédé s'applique tout particulièrement aux réseaux à base de matériaux semi-conducteurs comme l'AsGa qui présentent de grands avantages techniques tant du point de vue de leurs propriétés physiques que de leur mise en oeuvre technologique.

Plus précisément, l'invention a pour objet un procédé de réalisation d'un réseau optique non linéaire épais de plusieurs centaines de microns d'épaisseur à partir d'un réseau optique non linéaire épais initial, l'épaisseur du réseau optique non linéaire étant supérieure à l'épaisseur du réseau optique non linéaire initial, ledit réseau initial comportant au moins une pluralité de couches planes et parallèles entre elles, les dites couches ayant au moins deux coefficients non linéaires différents en valeurs algébriques, ledit réseau initial comprenant une première face et une seconde face sensiblement parallèles entre elles et sensiblement perpendiculaires au plan moyen des couches, ladite seconde face étant libre, caractérisé en ce qu'il comporte les étapes de réalisation suivantes :

- Une première étape de détermination de l'épaisseur de la partie supérieure du réseau initial située sous la seconde face comportant des imperfections de structure ;
- Une seconde étape de polissage de la seconde face dudit réseau initial permettant d'éliminer la partie supérieure comportant lesdites imperfections et d'obtenir une troisième face polie et plane, ladite face sensiblement perpendiculaire au plan moyen des couches ;
- Une troisième étape de nettoyage et de contrôle de ladite troisième face ;
- Au moins, une quatrième étape de dépôt par épitaxie d'au moins une couche déposée de matériau sur ladite troisième face, la croissance épitaxiale reproduisant dans ladite couche déposée une structure semblable à celle du réseau initial, l'ensemble du réseau initial et de ladite couche déposée constituant le réseau optique non linéaire.

L'invention sera mieux comprise et d'autres avantages apparaîtront à la lecture de la description qui va suivre donnée à titre non limitatif et grâce aux figures annexées parmi lesquelles :

- les figures 1 à 4 représentent les différentes étapes du procédé de réalisation selon l'invention. Elles comportent une vue générale en coupe du réseau et une vue cerclée partielle agrandie montrant la structure du réseau ;
- les figures 5a et 5b représentent les différentes étapes de réalisation du premier réseau optique dans le cas où celui-ci est réalisé à partir d'un ensemble monolithique de lames cristallines ;
- les figures 6a à 6c représentent les différentes étapes d'un procédé de préparation du réseau permettant de faciliter l'opération de polissage du réseau optique initial.

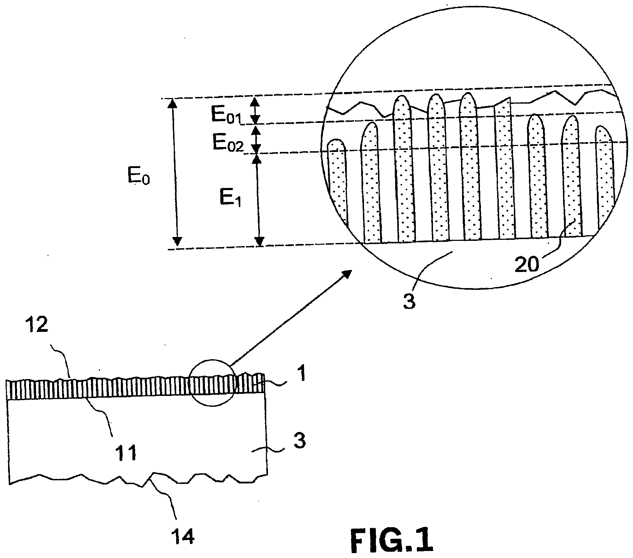

La figure 1 représente une vue en coupe et une vue agrandie du réseau optique non linéaire initial 1. Ce réseau 1 comporte une pluralité de couches 20 dont les coefficients linéaires varient d'une couche à la couche suivante. Ce réseau comporte une première face 11 et une seconde face 12 sensiblement parallèles. Il existe différents procédés de réalisation dudit réseau initial.

Dans un premier mode de réalisation tel que représenté sur la figure 1, le matériau non linéaire est déposé sur un substrat germe 3. Celui-ci comprend un matériau cristallin ayant une première orientation cristalline, la face supérieure 11 du substrat germe comportant une structure de faible épaisseur, ladite structure étant constituée d'un réseau dit précurseur de bandes parallèles du même matériau cristallin et d'orientation cristalline inverse de celle du matériau cristallin du substrat germe 3. Le dépôt est effectué, par exemple, par la méthode de croissance épitaxiale HVPE (Hydride Vapour Phase Epitaxy) sur la face supérieure 11 du substrat germe. Dans ce cas, le dépôt, sélectif en termes d'orientation cristalline, est effectué sur une épaisseur totale $E_0$. Cette épaisseur comporte d'une part des imperfections de la surface 12 sur une première épaisseur $E_{01}$ et d'autre part des imperfections de structure sur une seconde épaisseur $E_{02}$ dues, par exemple, aux variations de vitesse de croissance des différentes couches lors du dépôt ou aux défauts initiaux du substrat germe. L'épaisseur utile $E_1$ vaut donc :

$$E_1 = E_0 - E_{01} - E_{02}$$

Dans un second mode de réalisation, le procédé de réalisation du réseau optique initial comporte les étapes suivantes :

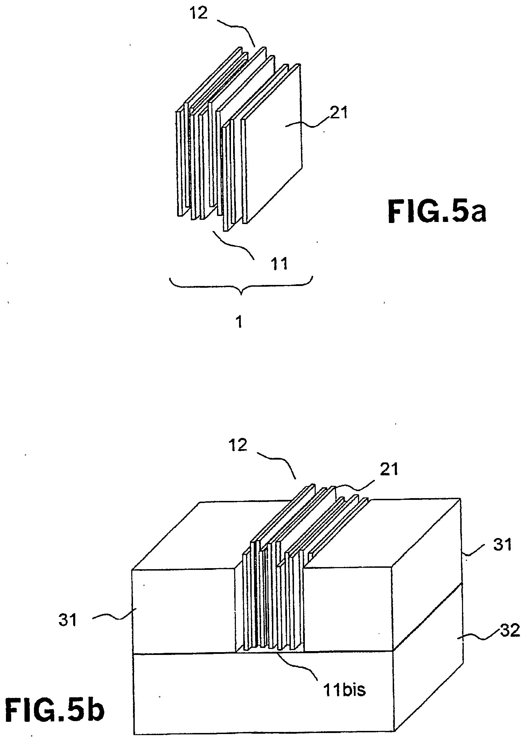

- Une première sous-étape de réalisation d'un empilement de lames cristallines 21 à faces planes et parallèles de même matériau, de faible épaisseur à orientation cristalline périodiquement alternée ;
- Une seconde sous-étape d'assemblage desdites lames de façon à obtenir un seul ensemble monolithique constituant ledit réseau optique initial 1, ledit réseau comportant une première face 11 et une seconde face 12 sensiblement perpendiculaires au plan moyen des lames cristallines tel que représenté sur la figure 5a.

Là encore, il est impossible d'obtenir un empilement parfait sur toute son épaisseur et les faces de l'empilement présentent, par conséquent, également des imperfections de surface et de structure.

La première étape du procédé de réalisation consiste à déterminer l'épaisseur utile $E_1$. Les épaisseurs des différentes couches étant de l'ordre de quelques microns à quelques dizaines de microns, les moyens de détermination de l'épaisseur comprenant des imperfections sont des dispositifs de visualisation optiques. L'observation par la tranche du réseau initial permet de déterminer les épaisseurs $E_0$, $E_{01}$ et $E_{02}$. Une découpe éventuelle peut être réalisée dans le substrat de façon que le réseau affleure le substrat après découpe, améliorant ainsi l'observation. Une révélation chimique éventuelle peut être également réalisée afin d'améliorer le contraste.

Avant de réaliser la seconde étape du procédé de réalisation, des étapes de préparation préliminaires peuvent être effectuées afin de faciliter ladite étape.

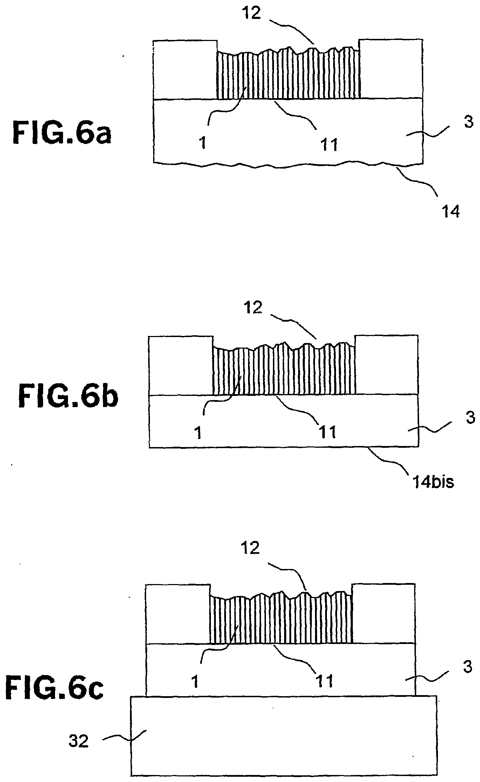

Dans le cas où le réseau initial a été réalisé sur un substrat germe, ces étapes préliminaires sont représentées sur les figures 6a à 6c. Elles comportent :

- Une première étape préliminaire de doucissage de la face inférieure 14 du substrat pour obtenir la face plane et polie 14 bis (figure 6a et figure 6b) ;
- Une seconde étape préliminaire de collage d'au moins ladite face inférieure 14bis sur au moins un support plan 32 (figure 6c), la mise en place du support facilitant la manipulation du réseau optique initial pour les opérations de polissage ultérieures.

Dans le cas où le réseau initial est un empilement monolithique de lames cristallines, les étapes préliminaires sont les suivantes :

- Une première étape préliminaire de doucissage de la première face 11 de l'empilement monolithique pour obtenir la face plane 11 bis ;
- Une seconde étape préliminaire de collage d'au moins ladite première face 11 bis sur au moins un support plan 32 comme indiqué sur la figure 5b, la mise en place du support facilitant la manipulation de l'ensemble monolithique pour les opérations de polissage ultérieures de la seconde face. Eventuellement, des renforts latéraux 31 peuvent être disposés d'au moins un côté de l'empilement monolithique 2, lesdits renforts étant solidaires du support 32.

La seconde étape du procédé de réalisation consiste, dans un premier temps, à doucir la face 12 par abrasion mécanique de façon à éliminer les perturbations de surface présentes dans les épaisseurs $E_{01}$ et $E_{02}$ ; puis dans un second temps de compléter cette première opération de doucissage mécanique par une seconde opération de polissage mécano-chimique et d'obtenir une qualité de surface suffisante pour réaliser un dépôt par épitaxie. On obtient alors la face plane polie 13 sensiblement perpendiculaire au plan moyen des couches du réseau 1. Cette seconde opération peut s'avérer superflue dans certaines conditions de dépôts par épitaxie par la méthode HVPE.

Lorsque le premier réseau a été réalisé sur un substrat de grande taille, typiquement de diamètre supérieur à 50 millimètres (soit l'équivalent d'un diamètre de « wafer » standard de 2 inches en unité anglaise), il est possible de polir la face 12 du réseau et la face inférieure 14 du substrat simultanément dans un dispositif à double plateaux. Ces dispositifs sont notamment utilisés dans l'industrie de la microélectronique pour polir les tranches de semi-conducteurs. Il est, cependant, dans ce cas, plus difficile de contrôler l'épaisseur et la qualité du réseau obtenu. On procède alors par étapes successives jusqu'à l'obtention d'un réseau poli ne contenant plus de perturbations de structures.

Pour réussir cette opération de polissage, le réseau ne doit pas être trop fragile. Lorsque le réseau initial a été réalisé sur un substrat, une épaisseur minimale de 50 microns pour le réseau seul et de 300 microns pour le substrat est souhaitable ; lorsque le réseau initial ne comporte pas de substrat, une épaisseur minimale de 350 microns est souhaitable.

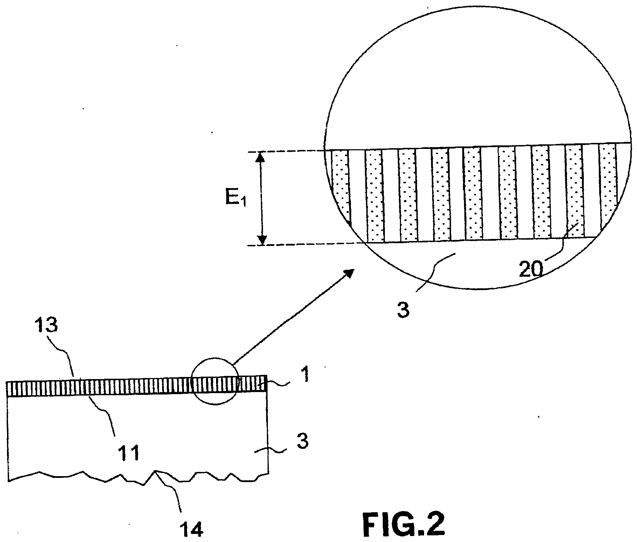

On obtient en finale le réseau représenté sur la figure 2. La seconde face 12 est devenue la troisième face plane 13. L'épaisseur du réseau est maintenant $E_1$.

Dans une troisième étape du procédé, la surface 13 est nettoyée et contrôlée, par exemple par des moyens optiques, afin de vérifier que le réseau est prêt à l'emploi pour des dépôts par épitaxie dans des conditions qui préservent la structure du réseau.

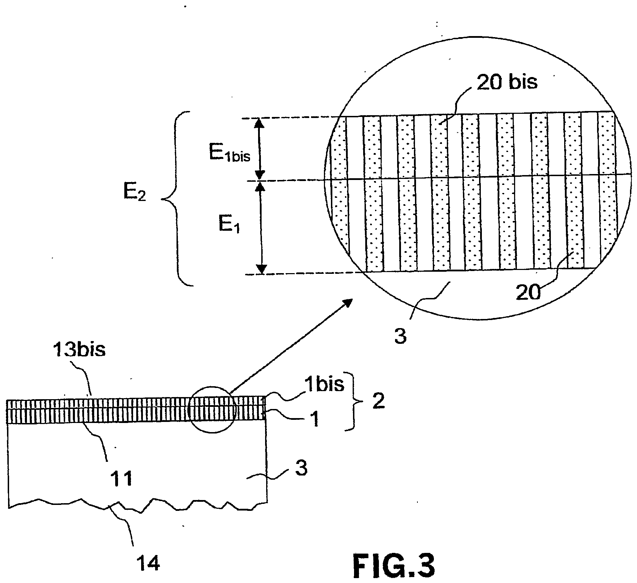

Enfin, dans une quatrième étape du procédé, au moins une première couche 1bis de matériau est déposée sur ladite troisième face 13 dans des conditions préservant la structure du premier réseau, l'ensemble du premier réseau 1 et de ladite couche 1 bis constituant le second réseau optique non linéaire 2 comme il est indiqué sur la figure 3. La couche 1 bis ayant une épaisseur $E_{1bis}$, l'épaisseur finale du réseau vaut maintenant $E_2$ avec:

$$E_2 = E_{1bis} + E_1$$

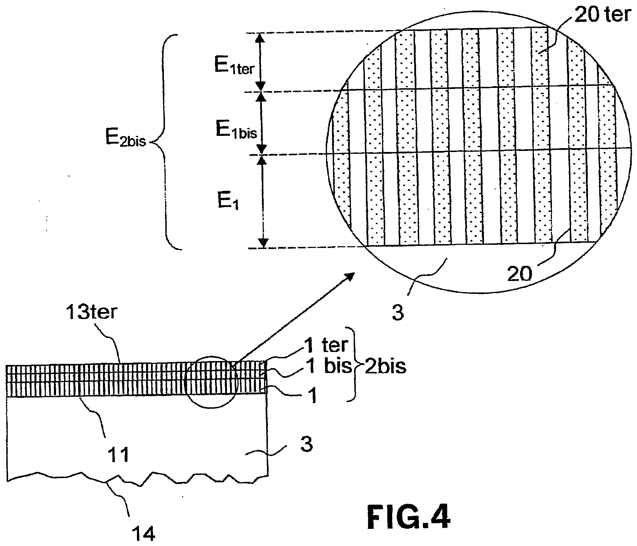

Il est, bien entendu possible de recommencer au moins une fois la quatrième étape comme il est indiqué sur la figure 4. Sur cette figure, une seconde couche 1ter d'épaisseur $E_{1ter}$ est déposée sur la couche 1bis. En finale, le réseau a donc l'épaisseur totale $E_{2bis}$ qui vaut :

$$E_{2bis} = E_2 + E_{1ter} = E_{1ter} + E_{1bis} + E_1$$

Cette technique peut être utilisée :

- soit pour augmenter l'épaisseur finale du réseau, chaque couche est alors composée du même matériau.
- Soit pour réaliser des fonctions particulières de type guide d'onde, les matériaux de deux couches successives ont alors des propriétés optiques différentes, comme, notamment, leur indice optique.

Les dépôts des couches sont réalisés par épitaxie. Parmi les procédés possibles, on citera :

- la méthode de croissance épitaxiale OMCVD (Organo-Metallic Chemical Vapour Déposition) et la méthode de croissance épitaxiale MBE (Molecular Beam Epitaxy) pour réaliser des couches ne dépassant pas quelques microns d'épaisseurs.
- La méthode de croissance épitaxiale HVPE (Hydride Vapour Phase Epitaxy) pour réaliser des couches plus épaisses.

Si le substrat de départ comporte des zones sans réseau optique non-linéaire, la qualité de la préparation de sa surface peut également permettre de fabriquer par épitaxie, par les méthodes OMCVD ou MBE, des structures co-intégrées avec des guides d'onde à réseau optique non-linéaire comme par exemple des diodes laser, des modulateurs optiques, des sections à réseau de Bragg ....

Il existe différents matériaux possibles permettant de réaliser les réseaux optiques non linéaires. Il est possible d'utiliser, par exemple, un cristal appartenant à la classe cristallographique cubique 43m.

Le tenseur de susceptibilité est représenté ci-dessous pour cette classe cristallographique :

$$\begin{pmatrix} 0 & 0 & 0 & d & 0 & 0 \\ 0 & 0 & 0 & 0 & d & 0 \\ 0 & 0 & 0 & 0 & 0 & d \end{pmatrix}$$

Ce cristal peut être ou de l'arséniure de gallium (AsGa) ou du phosphure d'indium (InP) ou du tellurure de cadmium (CdTe) ou du séléniure de zinc (ZnSe) ou du tellurure de zinc (ZnTe) ou du phosphure de gallium (GaP) ou de l'arséniure d'indium (InAs) ou de l'antimoniure d'indium (InSb).

Le matériau peut également être du tellure (Te) ou du sélénium (Se) ou du nitrure de gallium (GaN).

Il est également possible d'utiliser de l'arséniure de gallium et d'aluminium (GaAlAs) pour réaliser des couches d'indices différents permettant la réalisation de guides d'onde.

**Revendications**

1. Procédé de réalisation d'un réseau optique non linéaire épais (2) de plusieurs centaines de microns d'épaisseur à partir d'un réseau optique non linéaire initial (1), l'épaisseur ($E_2$) du réseau optique non linéaire (2) étant supérieure à l'épaisseur ($E_0$) du réseau optique non linéaire initial (1), ledit réseau initial comportant au moins une pluralité de couches (20) planes et parallèles entre elles, les dites couches ayant au moins deux coefficients non linéaires différents en valeurs algébriques, ledit réseau initial comprenant une première face (11) et une seconde face (12) sensiblement parallèles entre elles et sensiblement perpendiculaires au plan moyen des couches, ladite seconde face (12) étant libre, **caractérisé en ce qu'**il comporte les étapes de réalisation suivantes :

   - Une première étape de détermination de l'épaisseur ($E_{01}$, $E_{02}$) de la partie supérieure du réseau initial (1) située sous la seconde face (12) comportant des imperfections de surface de structure ;
   - Une seconde étape de polissage de la seconde face (12) dudit réseau initial (1) permettant d'éliminer la partie supérieure comportant lesdites imperfections et d'obtenir une troisième face (13) polie et plane, ladite face sensiblement perpendiculaire au plan moyen des couches (20) ;
   - Une troisième étape de nettoyage et de contrôle de ladite troisième face (13) ;
   - Au moins, une quatrième étape de dépôt par épitaxie d'au moins une couche déposée (1bis, 1ter) de matériau sur ladite troisième face (13), la croissance épitaxiale reproduisant dans ladite couche déposée une structure semblable à celle du réseau initial, l'ensemble du réseau initial (1) et de ladite couche déposée (1 bis, 1ter) constituant le réseau optique non linéaire (2).

2. Procédé de réalisation d'un réseau optique (2) selon la revendication 1, **caractérisé en ce que** les moyens de détermination de l'épaisseur comprenant des imperfections sont des dispositifs de visualisation optiques.

3. Procédé de réalisation d'un réseau optique (2) non linéaire selon l'une des revendications précédentes,

**caractérisé en ce que** l'épaisseur ($E_1$) du réseau optique initial, après la seconde étape de réalisation, vaut, au moins, 50 microns.

4. Procédé de réalisation d'un réseau optique (2) non linéaire selon la revendication 1, **caractérisé en ce que** le réseau optique (1) non linéaire initial est porté par un substrat germe (3) comportant une face inférieure (14) et une face supérieure plane (11), la face supérieure (11) du substrat germe étant confondue avec la première face (11) dudit réseau optique non linéaire initial (1).

5. Procédé de réalisation d'un réseau optique (2) non linéaire selon la revendication 4, **caractérisé en ce que** le substrat germe (3) comprend un matériau cristallin ayant une première orientation cristalline, la face supérieure (11) du substrat germe comportant une structure de faible épaisseur, ladite structure étant constituée d'un réseau précurseur de bandes parallèles du même matériau cristallin et d'orientation cristalline inverse de celle du substrat germe (3).

6. Procédé de réalisation d'un réseau optique (2) non linéaire selon la revendication 5, **caractérisé en ce que** l'épaisseur du substrat germe (3) vaut, au moins, 300 microns.

7. Procédé de réalisation d'un réseau optique (2) selon la revendication 4, **caractérisé en ce que** la seconde étape de réalisation comporte les étapes préliminaires suivantes :

   • Une première étape préliminaire de doucissage de la face inférieure (14) du substrat ;
   • Une seconde étape préliminaire de collage d'au moins ladite face inférieure (14) sur au moins un support plan (32), la mise en place du support facilitant la manipulation du réseau optique initial (1) pour les opérations de polissage ultérieures.

8. Procédé de réalisation d'un réseau optique (2) non linéaire selon la revendication 4, **caractérisé en ce que** le réseau optique (1) non linéaire initial est obtenu par la méthode de croissance épitaxiale HVPE, Hydride Vapour Phase Epitaxy, sur la face supérieure du substrat germe (3).

9. Procédé de réalisation d'un réseau optique (2) selon l'une des revendications précédentes, **caractérisé en ce que**, au cours de la quatrième étape de réalisation, au moins deux couches (1 bis, 1ter) de matériau d'indice optique différent sont déposées, de façon à constituer un guide d'onde optique.

10. Procédé de réalisation d'un réseau optique (2) non linéaire selon l'une des revendications précédentes **caractérisé en ce que**, au cours de la quatrième étape de réalisation, au moins une des couches (1bis, 1ter) est obtenue par la méthode de croissance épitaxiale OMCVD, Organo-Metallic Chemical Vapour Deposition, ou MBE, Molecular Beam Epitaxy.

**Patentansprüche**

1. Verfahren zum Realisieren eines dicken nichtlinearen optischen Gitters (2) mit einer Dicke von mehreren 100 Mikron auf der Basis eines anfänglichen nichtlinearen optischen Gitters (1), wobei die Dicke ($E_2$) des nichtlinearen optischen Gitters (2) größer ist als die Dicke ($E_0$) des anfänglichen nichtlinearen optischen Gitters (1), wobei das anfängliche Gitter wenigstens eine Mehrzahl von ebenen und zueinander parallelen Schichten (20) umfasst, wobei die Schichten wenigstens zwei nichtlineare, nach algebraischen Werten unterschiedliche Koeffizienten hat, wobei das anfängliche Gitter eine erste Fläche (11) und eine zweite Fläche (12) hat, die im Wesentlichen parallel zueinander und im Wesentlichen senkrecht zur Mittelebene der Schichten sind, wobei die zweite Fläche (12) frei ist, **dadurch gekennzeichnet, dass** es die folgenden Realisierungsschritte beinhaltet:

   • einen ersten Schritt des Bestimmens der Dicke ($E_{01}$, $E_{02}$) des oberen Teils des anfänglichen Gitters (1), der sich unter der zweiten Fläche (12) befindet, die Strukturoberflächenimperfektionen aufweist;
   • einen zweiten Schritt des Polierens der zweiten Fläche (12) des anfänglichen Gitters (1), so dass der die Imperfektionen aufweisende obere Teil eliminiert und eine polierte und ebene dritte Fläche (13) erhalten werden kann, wobei die Fläche im Wesentlichen senkrecht zur Mittelebene der Schichten (20) ist;
   • einen dritten Schritt des Reinigens und Kontrollierens der dritten Fläche (13);
   • wenigstens einen vierten Schritt des epitaxialen Absetzens von wenigstens einer abgesetzten Materialschicht (1bis, 1ter) auf die dritte Fläche (13), wobei das epitaxiale Wachstum in der abgesetzten Schicht eine Struktur ähnlich der Zelle des anfänglichen Gitters reproduziert, wobei die Baugruppe aus dem anfänglichen Gitter (1) und der abgesetzten Schicht (1bis, 1ter) das nichtlineare optische Gitter (2) bildet.

2. Verfahren zum Realisieren eines optischen Gitters (2) nach Anspruch 1, **dadurch gekennzeichnet, dass** die Mittel zum Bestimmen der Dicke, die Imperfektionen umfasst, optische Visualisierungsvorrichtungen sind.

3. Verfahren zum Realisieren eines nichtlinearen optischen Gitters (2) nach einem der vorherigen Ansprüche, **dadurch gekennzeichnet, dass** die Dicke ($E_1$) des anfänglichen optischen Gitters nach dem zweiten Realisierungsschritt wenigstens 50 Mikron beträgt.

4. Verfahren zum Realisieren eines nichtlinearen optischen Gitters (2) nach Anspruch 1, **dadurch gekennzeichnet, dass** das anfängliche nichtlineare optische Gitter (1) durch ein Keimsubstrat (3) getragen wird, das eine untere Fläche (14) und eine ebene obere Fläche (11) aufweist, wobei die obere Fläche (11) des Keimsubstrats mit der ersten Fläche (11) des anfänglichen nichtlinearen optischen Gitters (1) zusammenfällt.

5. Verfahren zum Realisieren eines nichtlinearen optischen Gitters (2) nach Anspruch 4, **dadurch gekennzeichnet, dass** das Keimsubstrat (3) ein kristallines Material mit einer ersten Kristallorientierung hat, wobei die obere Fläche (11) des Keimsubstrats eine Struktur von geringer Dicke hat, wobei die Struktur von einem Vorläufergitter mit parallelen Banden desselben kristallinen Materials und mit einer Kristallorientierung umgekehrt zu der Zelle des Keimsubstrats (3) gebildet wird.

6. Verfahren zum Realisieren eines nichtlinearen optischen Gitters (2) nach Anspruch 5, **dadurch gekennzeichnet, dass** die Dicke des Keimsubstrats (3) wenigstens 300 Mikron beträgt.

7. Verfahren zum Realisieren eines optischen Gitters (2) nach Anspruch 4, **dadurch gekennzeichnet, dass** der zweite Realisierungsschritt die folgenden Vorabschritte beinhaltet:

  • einen ersten Vorabschritt des Glättens der unteren Fläche (14) des Substrats;
  • einen zweiten Vorabschritt des Klebens wenigstens der unteren Fläche (14) auf wenigstens einen ebenen Träger (32), wobei die Platzierung des Trägers die Manipulation des anfänglichen optischen Gitters (1) für die späteren Poliervorgänge erleichtert.

8. Verfahren zum Realisieren eines nichtlinearen optischen Gitters (2) nach Anspruch 4, **dadurch gekennzeichnet, dass** das anfängliche nichtlineare optische Gitter (1) mit dem epitaxialen Wachstumsverfahren HVPE (Hydriddampphasenepitaxie) auf der oberen Fläche des Keimsubstrats (3) erhalten wird.

9. Verfahren zum Realisieren eines optischen Gitters (2) nach einem der vorherigen Ansprüche, **dadurch gekennzeichnet, dass** im Laufe des vierten Realisierungsschritts wenigstens zwei Materialschichten (1bis, 1ter) mit einem anderen optischen Index abgesetzt werden, um einen optischen Wellenleiter zu bilden.

10. Verfahren zum Realisieren eines nichtlinearen optischen Gitters (2) nach einem der vorherigen Ansprüche, **dadurch gekennzeichnet, dass** im Laufe des vierten Realisierungsschrittes wenigstens eine der Schichten (1bis, 1ter) mit dem epitaxialen Wachstumsverfahren OMCVD (metallorganische chemische Dampfphasenabscheidung) oder MBE (Molekularstrahlepitaxie) erhalten wird.

## Claims

1. A method of producing a thick non-linear optical grating (2) with a thickness of several hundred microns from an initial non-linear optical grating (1), the thickness ($E_2$) of the non-linear optical grating (2) being greater than the thickness ($E_0$) of the initial non-linear optical grating (1), said initial grating comprising at least one plurality of mutually parallel planar layers (20), said layers having at least two non-linear coefficients having algebraically different values, said initial grating comprising a first face (11) and a second face (12) that are substantially parallel to one another and substantially perpendicular to the mean plane of the layers, said second face (12) being free, **characterised in that** it comprises the following production steps:

  • a first step of determining the thickness ($E_{01}$, $E_{02}$) of the upper part of the initial grating (1) located beneath the second face (12) and comprising structural surface imperfections;
  • a second step of polishing the second face (12) of said initial grating (1), making it possible to remove the upper part comprising said imperfections and to obtain a polished and planar third face (13), said face substantially perpendicular to the mean plane of the layers (20);
  • a third step of cleaning and checking said third face (13);
  • at least a fourth step of epitaxially depositing at least one layer (Ibis, 1ter) of material deposited on said third face (13), the epitaxial growth reproducing in said deposited layer a structure similar to that of the initial grating, the combination of the initial grating (1) and said deposited layer (1bis, 1ter) constituting the non-linear optical grating (2).

2. The method of producing an optical grating (2) according claim 1, **characterised in that** the means of determining the thickness having imperfections are optical display devices.

3. The method of producing a non-linear optical grating (2) according to either of the preceding claims, **characterised in that** after the second production step, the thickness ($E_1$) of the initial optical grating is at least 50 microns.

4. The method of producing a non-linear optical grating (2) according to claim 1, **characterised in that** the initial non-linear optical grating (1) is supported by a seed substrate (3) comprising a lower face (14) and a planar upper face (11), the upper face (11) of the seed substrate coinciding with the first face (11) of said initial non-linear optical grating (1).

5. The method of producing a non-linear optical grating (2) according to claim 4, **characterised in that** the seed substrate (3) comprises a crystalline material having a first crystal orientation, the upper face (11) of the seed substrate comprising a thin structure, said structure being formed from a precursor grating of parallel bands of the same crystalline material and of the opposite crystal orientation to that of the seed substrate (3).

6. The method of producing a non-linear optical grating (2) according to claim 5, **characterised in that** the thickness of the seed substrate (3) is at least 300 microns.

7. The method of producing an optical grating (2) according to claim 4, **characterised in that** the second production step comprises the following preliminary steps:

   • a first preliminary step of polishing the lower face (14) of the substrate;
   • a second preliminary step of bonding at least said lower face (14) to at least one planar support (32), the positioning of the support facilitating handling of the initial optical grating (1) for the subsequent polishing operations.

8. The method of producing a non-linear optical grating (2) according to claim 4, **characterised in that** the initial non-linear optical grating (1) is obtained by the HVPE epitaxial growth (hydride vapour phase epitaxy) method on the upper face of the seed substrate (3).

9. The method of producing an optical grating (2) according to any of the preceding claims, **characterised in that**, during the fourth production step, at least two layers (Ibis, 1ter) of material with a different optical index are deposited so as to form an optical waveguide.

10. The method of producing a non-linear optical grating (2) according to any of the preceding claims, **characterised in that**, during the fourth production step, at least one of the layers (1bis, 1ter) is obtained by the OMCVD (metalorganic chemical vapour deposition), or MBE (molecular beam epitaxy) epitaxial growth method.

**FIG.1**

FIG.2

**FIG.3**

FIG.4

12

21

## FIG.5a

11

1

12

21

31

31

11bis

32

## FIG.5b

**FIG.6a**

12

1 11 3

14

**FIG.6b**

12

1 11 3

14bis

**FIG.6c**

12

1 11 3

32

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.A. ARMSTRONG ; N. BLOEMBERGEN ; J. DUCUING ; P.S. PERSHAN.** Interactions between light waves in a nonlinear dielectric. *Physical Review,* 1962, vol. 127, 1918-1939
- **E. LALLIER ; M. BREVIGNON ; J. LEHOUX.** Efficient second-harmonic generation of a CO2 laser with a quasi-phase-matched GaAs crystal. *Optics Letters,* 1998, vol. 23 (19), 1511-1513
- **J.B. YOO ; R. BHAT ; C. CANEAU ; M.A. KOZA.** Quasi-phase-matched second-harmonic generation in AlGaAs waveguides with periodic domain inversion achieved by wafer-bonding. *Applied Physics Letters,* 1995, vol. 66 (25), 3410-3412
- **L. BECOUAM ; B. GERARD ; M. BREVIGNON ; J. LEHOUX ; Y. GOURDEL ; E . LALLIER.** Second-harmonic generation of CO2 laser using thick quasi-phase-matched GaAs layer grown by hydride vapour phase epitaxy. *Electronics Letters,* 1998, vol. 34 (25), 2409-2410
- **L.A. EYRES ; P.J. TOURREAU ; T.J. PINGUET ; C.B. EBERT ; J.S. HARRIS ; M.M. FEJER ; L. BECOUAM ; B. GERARD ; E. LALLIER.** All-epitaxial fabrication of thick, orientation-pattemed GaAs films for nonlinear optical frequency conversion. *Applied Physics Letters,* 2001, vol. 79 (7), 904-907